# FASCICULE DE BREVET EUROPEEN

(11) **EP 3 924 616 B1**
(45) Date de publication et mention de la délivrance du brevet: **19.03.2025**
(21) Numéro de dépôt: 20700496.1
(22) Date de dépôt: 14.01.2020
(51) Int. Cl.: F02M 37/30, B01D 35/18, B01D 29/15, B01D 29/60, B01D 29/90

(54) **FILTRE A CARBURANT AVEC RECHAUFFEUR, INCLUANT DES MOYENS DE GUIDAGE DE CARBURANT DANS UNE ZONE DE RECHAUFFAGE**
KRAFTSTOFFFILTER MIT HEIZUNG, KRAFTSTOFFFÜHRUNG IN DEM HEIZBEREICH
FUEL FILTER WITH HEATER, INCLUDING FUEL GUIDANCE MEANS IN A HEATING AREA

(30) Priorité: 13.02.2019 FR 1901425
(43) Date de publication de la demande: 22.12.2021
(73) Titulaire: Purflux Filtration, 78280 Guyancourt (FR)
(72) Inventeur: IWANCZUK, Arnaud, 94450 Seraincourt (FR)
(74) Mandataire: Plasseraud IP
(86) Numéro de dépôt international: PCT/EP2020/050829
(87) Numéro de publication internationale: WO 2020/164838

(56) Documents cités:
- EP-A1- 3 023 135
- EP-A2- 0 657 199
- WO-A1-2018/075058
- GB-A- 2 140 319

## Description

Le domaine technique de la présente invention est celui des filtres à carburant et plus particulièrement des filtres à carburant (à gazole typiquement) dans lesquels est intégré au moins un appareil électrique tel qu'un réchauffeur.

Plus particulièrement, l'invention concerne parmi ces filtres à carburant, ceux qui comprennent un boîtier qui délimite un volume intérieur dans lequel est disposé de façon amovible un élément filtrant qui sépare le volume intérieur en une zone d'amont communiquant avec une entrée de carburant brut et en une zone d'aval communiquant avec une sortie de carburant filtré, l'élément filtrant comprenant un média filtrant qui s'étend de façon annulaire autour d'un axe longitudinal, entre deux extrémités axiales dont l'une est constituée par un flasque de recouvrement d'une face axiale du média filtrant, ce type de filtre comprenant en outre :
- un espace intérieur creux délimité intérieurement par le média filtrant ;
- une plaque interposée entre l'entrée et le flasque de l'élément filtrant, cette plaque comprenant une première face délimitant avec le boîtier une première enceinte en communication avec l'entrée ;
- un dispositif de chauffage qui s'étend dans la première enceinte ;
- un passage axial d'évacuation passant ou débouchant par une ouverture du flasque pour faire communiquer l'espace intérieur creux avec la sortie, ce passage axial d'évacuation traversant la première enceinte ;
sachant que le média filtrant s'étend dans une deuxième enceinte où s'effectue une filtration centripète de carburant, depuis une région annulaire périphérique dans la zone d'amont vers l'espace intérieur creux.

Le document EP 1450031 décrit ce type de filtre, avec un agencement de la deuxième enceinte (chambre de filtration de gazole) sous la première enceinte où est chauffé le carburant brut. Un tel filtre est adapté pour un démarrage à froid, grâce à un réchauffage du carburant brut à filtrer d'une part, et grâce à des cloisons du flasque supérieur qui empêchent le liquide réchauffé (au démarrage) de se mélanger de façon importante avec du gazole froid ou carburant similaire qui restait dans le boîtier.

On connaît également, par le document EP 0657199, un filtre pourvu d'un module de chauffage placé dans un compartiment délimité par une tête de filtre, le compartiment étant subdivisé en deux sous-zones par une paire de plaques afin de rendre le chauffage du carburant brut plus uniforme. Contrairement à la solution du document EP 1450031, le flasque supérieur de l'élément filtrant est situé entièrement sous le compartiment.

Dans les applications de filtration de carburant, il existe un besoin pour d'autres filtres bien adaptés pour réaliser un réchauffage efficace et permettant une intégration compacte de l'élément filtrant, le cas échéant avec un agencement compact compatible avec des fonctionnalités additionnelles.

A cet effet, il est proposé selon l'invention un filtre à carburant tel que défini dans la revendication 1.

De préférence, le ou les organes saillants constituent l'au moins une cloison en traversant axialement la plaque.

Typiquement, les ou les organes saillants appartiennent au flasque. Alternativement, le ou les organes saillants sont portés par un autre composant de l'élément filtrant (par exemple un tube central, le média ou un autre organe d'interface embarqué dans l'élément filtrant, en étant clippé/encliqueté ou fixé d'une autre façon pour être solidaire de l'élément filtrant et amovible avec cet élément filtrant).

Dans une option de réalisation préférée, le flasque présente ladite cloison saillante qui fait saillie axialement par rapport à la plaque pour cloisonner la première enceinte et ainsi guider et/ou forcer un écoulement de carburant brut vers le ou les éléments chauffants.

Selon une option préférée, l'au moins une cloison saillante comprend ou consiste en une patte axiale qui s'étend axialement plus loin vers l'extérieur qu'un débouché central formé par l'ouverture du flasque en traversant axialement la plaque, typiquement en étant insérée dans une fente de la plaque.

Avec un tel agencement, il est permis de faire jouer à l'élément filtrant, et au flasque de l'élément filtrant préférentiellement, un rôle de détrompeur, ce qui est avantageux pour éviter d'installer l'élément filtrant dans un mauvais filtre (ce qui sera détecté par l'impossibilité de loger la cloison saillante si on essaie d'installer l'élément filtrant dans un boitier qui ne dispose pas de la complémentarité requise).

Selon une particularité, l'au moins une cloison saillante (en saillie typiquement vers le haut/ à l'opposé du média, par rapport à la plaque) est conçue et agencée pour guider et/ou forcer une circulation du carburant brut dans la première enceinte suivant un sens giratoire autour d'un élément tubulaire de délimitation du passage axial d'évacuation et suivant une trajectoire passant par un ou plusieurs éléments chauffant du dispositif de chauffage. On comprend que la cloison saillante s'oppose typiquement à ce que du carburant brut circule suivant un sens de circulation opposé au sens giratoire en passant par une zone de la première enceinte dépourvue d'élément chauffant et menant au passage axial d'alimentation. Grâce à ces dispositions, on s'assure que le passage axial d'alimentation est un passage axial d'alimentation en carburant brut réchauffé par le dispositif de chauffage.

Selon une option, la plaque présente un élément tubulaire de délimitation du passage axial d'évacuation qui inclut ou est entouré par :
- un premier organe de positionnement prévu pour coopérer par emboîtement axial dans un puits central d'une tête de filtre ou couvercle formant une partie supérieure du boîtier intégrant l'entrée et la sortie ; et
- un deuxième organe de positionnement prévu pour réaliser un contact étanche annulaire, de préférence radial, contre le flasque autour de ladite ouverture du flasque.

Selon, une particularité, la plaque s'étend autour du même axe longitudinal que l'élément filtrant, de façon annulaire. Ce type d'intégration peut faciliter le montage d'un composant fonctionnel, par exemple un détecteur d'eau, la plaque pouvant former un disque de même surface que le flasque sous-jacent. Par exemple, un détecteur d'eau peut être monté sur la plaque, dans la zone passive sans élément chauffant.

Dans des modes de réalisation préférés du filtre selon l'invention, on peut éventuellement avoir recours en outre à une ou plusieurs des dispositions suivantes :
- le passage axial d'alimentation comporte une ouverture traversante (ouverture axiale) réalisée sur la plaque, cette ouverture traversante étant diamétralement opposée au dispositif de chauffage et placée avec la fente d'insertion de la cloison saillante dans un même secteur angulaire de moins de 120° de la plaque formée comme un disque autour du passage axial d'évacuation (cette ouverture traversante étant donc telle qu'il existe un plan virtuel longitudinal incluant l'axe longitudinal qui traverse à la fois le dispositif de chauffage, le passage axial d'évacuation et l'ouverture traversante).
- l'au moins une cloison saillante comporte une patte axiale en contact étanche contre un élément de paroi solidaire du boîtier qui s'étend dans un plan parallèle à l'axe longitudinal.
- l'au moins une cloison saillante comporte un bord axial distal d'une portion radiale annulaire du flasque depuis laquelle la cloison saillante fait saillie, l'élément de paroi du boîtier formant une empreinte femelle ou encoche (par exemple en forme de U inversé) à complémentarité de forme pour coopérer avec la cloison saillante, qui est formée typiquement comme une patte axiale.

- la patte axiale est en contact étanche contre un élément de paroi du boîtier qui s'étend dans un plan parallèle à l'axe longitudinal.
- un muret ou éventuellement plusieurs murets de compartimentation sont formés dans la première enceinte, par utilisation du flasque de l'élément filtrant.
- chaque muret est en partie formé par une patte axiale du flasque.
- le passage axial d'alimentation est réalisé par une ouverture axiale de passage, formée dans la plaque, et qui est de préférence une unique ouverture de passage pour faire circuler du carburant brut (dans la zone d'amont) depuis la première enceinte vers le compartiment.
- le flasque présente un moyen déflecteur dont la section est sensiblement en forme de « U » dans un plan perpendiculaire à l'axe longitudinal, afin de guider radialement vers l'extérieur du carburant brut sortant de l'ouverture axiale/traversante suivant un secteur angulaire inférieur à 90° ou 120°, de préférence inférieur ou égal à 40°.
- le moyen déflecteur est sous la forme d'au moins une nervure saillante axialement en direction de la plaque.
- il est prévu, à l'aplomb de l'ouverture axiale de passage, une antichambre du compartiment qui présente une hauteur plus faible qu'une hauteur minimale de la première enceinte mesurée à l'aplomb de l'ouverture axiale de passage.
- le flasque présente un agencement de nervures décalé d'un côté par rapport au passage axial d'évacuation, cet agencement étant de préférence en forme de « U », pour délimiter l'antichambre du compartiment.
- la plaque présente, sur une deuxième face opposée à la première face, une nervure adjacente à l'ouverture axiale de passage pour dévier radialement vers l'extérieur le carburant brut, sélectivement dans un secteur angulaire ne dépassant pas 90° ou 120°, de préférence en étant inférieur ou égale à 80 et plus préférentiellement inférieur ou égale à 40°.
- il est prévu dans la première enceinte une zone d'antichambre dans laquelle le carburant issu de l'entrée arrive avant d'être chauffé par le ou les éléments chauffants du dispositif de chauffage, le flasque incluant la cloison saillante pour délimiter tout ou partie d'un bord arrière de la zone d'antichambre.
- la plaque inclut ou délimite une ouverture de passage permettant à du carburant circulant dans la première enceinte de rejoindre, via l'antichambre du compartiment, une région annulaire périphérique qui s'étend autour du média filtrant.
- la plaque présente un bourrelet annulaire qui fait saillie sur une face périphérique extérieure annulaire de la plaque, et permettant de réaliser un contact annulaire continu contre le boîtier, qui est de préférence un contact étanche.
- l'entrée débouche directement dans la première enceinte.
- la première enceinte constitue une unique enceinte de chauffage, de préférence entourée par une jupe du couvercle sur laquelle la plaque est en contact annulaire contact.
- la première enceinte se décompose en trois secteurs angulaires autour de l'élément tubulaire, à savoir :
   - un premier secteur angulaire pour l'admission du carburant brut entrant dans la première enceinte par l'ouverture de passage axiale, ce premier secteur s'étendant entre la cloison saillante et un bord proximal du dispositif de chauffage (ce qui correspond à une zone d'antichambre),
   - un deuxième secteur angulaire (correspondant à une zone de chauffage) pour monter le dispositif de chauffage, qui s'étend entre le bord proximal et un bord distal de la zone de débouché du carburant brut acheminé par l'entrée,
   - un troisième secteur angulaire postérieure au bord distal (et correspondant à une zone de circulation de carburant déjà chauffé), où s'étend l'ouverture axiale de passage, sachant que le sens giratoire correspond au sens de circulation passant successivement par le premier le deuxième puis le troisième secteur angulaire.

D'autres caractéristiques et avantages de la l'invention apparaîtront au cours de la description suivante d'une de ses formes de réalisation, donnée à titre d'exemple non limitatif, en regard des dessins.

On décrit maintenant brièvement les figures des dessins. Sur les dessins :
La figure 1 illustre un filtre à carburant conforme à l'invention, vu selon une coupe longitudinale.
La figure 2 montre en perspective le filtre de la figure 1, qui est coupé transversalement sur le dessus pour faire apparaître les accès d'entrée et de sortie du couvercle de ce filtre.
La figure 3 est une vue en coupe longitudinale (verticale) d'une tête de filtre intégrant un dispositif de chauffage utilisable pour former le filtre de la figure 1, le flasque supérieur de l'élément filtrant ayant été ajouté pour illustrer sa coopération avec la tête de filtre.
La figure 4 montre en perspective le filtre de la figure 1, qui est coupé transversalement pour faire apparaître un passage central d'évacuation de carburant propre et une enceinte correspondant à une chambre de chauffage de carburant brut qui s'étend autour de ce passage central.
La figure 5 est une vue en coupe longitudinale (verticale) de la tête de filtre montrée sur la figure 3 et tournée à 90° par rapport à celle de la figure 3, le flasque supérieur de l'élément filtrant ayant été ajouté pour illustrer sa coopération avec la tête de filtre pour délimiter un compartiment intermédiaire.
La figure 6 illustre en perspective un élément filtrant utilisable pour coopérer avec le boîtier pour former le filtre de la figure 1.
La figure 7 illustre en perspective et avec une coupe partielle des détails d'un montage superposé d'une plaque de fermeture d'une chambre de chauffage et d'un flasque supérieur de l'élément filtrant, dans un filtre du type montré sur la figure 1.
La figure 8 illustre, de façon éclatée, les parties du filtre de la figure 1 qui contribuent à former l'enceinte de chauffage avec un type de circulation de carburant brut selon une trajectoire contrainte par la présence d'une cloison saillante appartenant au flasque de l'élément filtrant.
La figure 9 illustre par une vue de détail par le dessus, une première enceinte obtenue dans une variante de réalisation dans laquelle la plaque présente un rabat adapté former une cloison saillante dans la première enceinte, par pivotement.
La figure 10 est une vue similaire à celle de la figure 9, illustrant une autre variante de réalisation dans laquelle la plaque s'étend entre deux bords d'extrémité dont un bord vient au contact de la cloison saillante formée dans le flasque de l'élément filtrant.

Ci-après un exposé détaillé de plusieurs modes de réalisation de l'invention assorti d'exemples et de référence aux dessins. Sur les différentes figures, des références identiques indiquent des éléments identiques ou similaires.

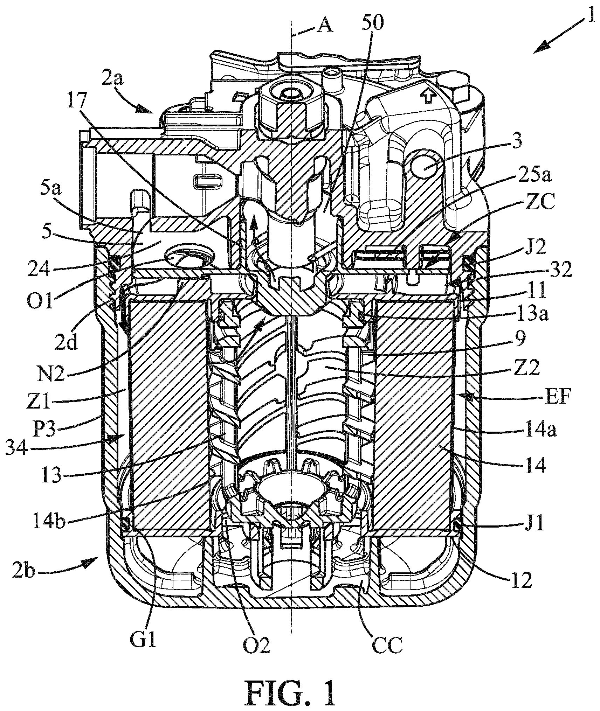

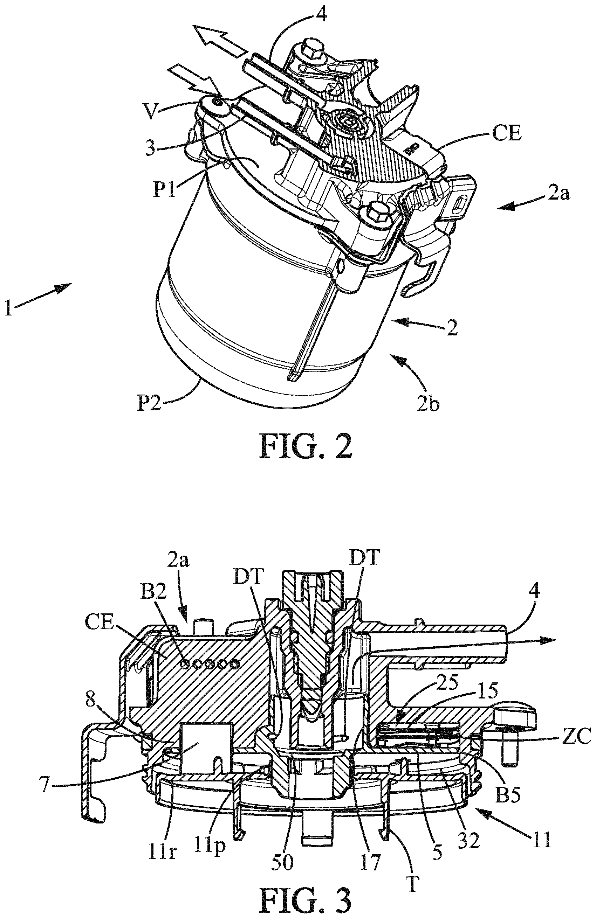

En référence aux figures 1, 2 et 3, il est représenté un filtre à carburant 1 qui comporte un boîtier 2 présentant une partie supérieure P1 comprenant une entrée 3 de carburant ainsi qu'une sortie 4 de carburant. Le carburant peut être du gazole. Le boîtier 2 délimite un volume intérieur dont une partie haute correspond à une première enceinte 24 dans laquelle est disposé un dispositif de chauffage 25 (visible sur la figure 3) et dont une partie basse correspond à une deuxième enceinte 34 dans laquelle est logé un élément filtrant EF. On comprend que la deuxième enceinte 34 est ici une chambre de filtration. Dans les exemples illustrés le boîtier 2 comporte un bol 2b ou composant de boîtier similaire ayant une paroi tubulaire P3 et une paroi de fond P2 permettant de délimiter tout ou partie de la deuxième enceinte 34. Il comporte également un couvercle 2a apte à fermer de façon étanche le bol 2b. Une fixation par vissage avec utilisation d'un joint J2 peut être utilisée. Dans des variantes de réalisation il peut être prévu un composant de boîtier supplémentaire, par exemple interposé entre la partie inférieure formée par le bol 2b et la partie supérieure formée par le couvercle 2a. Par ailleurs on peut très bien utiliser un couvercle amovible situé du côté inférieur, dans certaines variantes de réalisation.

Dans l'exemple représenté le couvercle 2a est une tête de filtre qui reste stationnaire/fixe par rapport au véhicule ou appareil à moteur à combustion interne dans lequel le filtre 1 est embarqué. Le bol 2b constitue alors la partie amovible que l'on sépare temporairement lors d'une opération de rechange de l'élément filtrant EF. Ce bol 2b s'étend vers le haut jusqu'à une extrémité supérieure pourvue d'un filetage 2d destiné à coopérer par vissage avec un taraudage réalisé sur une face interne d'une partie inférieure annulaire du couvercle 2a. Comme illustré notamment sur la figure 2, l'assemblage du boîtier 2 peut aussi être réalisé à l'aide de vis V ou éléments supplémentaires de fixation permettant de consolider et/ou verrouiller l'assemblage, en empêchant un dévissage accidentel du bol 2b.

Le joint J2 peut être intégré dans une gorge périphérique G2 de la partie inférieure annulaire du couvercle 22. Cette partie inférieure annulaire peut être une jupe 2j du couvercle 2a qui délimite la première enceinte 24 et protège le ou les composants fonctionnels montés solidaires du couvercle, notamment le dispositif de chauffage 15. Une plaque 5 pour supporter le dispositif de chauffage 25 est ainsi entourée par la jupe 2j, dans un mode de réalisation préféré, afin d'être logée intérieurement dans le couvercle 2a, la première enceinte 24 étant délimitée inférieurement par la plaque 5 (plaque 5 de fermeture de l'enceinte 24 par le dessous).

La plaque 5 est solidarisée au couvercle 2a par le dessus par des moyens de fixation. La plaque 5 comprenant une première face 5a (face supérieure ici) délimitant avec la partie supérieure P1 du boîtier 2 (le couvercle 2a ici) la première enceinte 24 qui est en communication avec l'entrée 3.

Le filtre à carburant 1 comprend un dispositif de chauffage 25 monté sur la plaque 5 et qui est ainsi disposé du côté de l'entrée 3, de sorte que la première enceinte 24 et la deuxième enceinte 34 sont disposées entre elles de façon superposée dans le volume intérieur du boîtier 2. Plus généralement, on comprend que la partie inférieure du boîtier 2 peut être dévissée de la partie supérieure afin notamment de remplacer l'élément filtrant EF usager par un nouvel élément filtrant. Un tel remplacement peut être effectué en conservant le dispositif de chauffage 25 qui reste solidaire de la partie supérieure P1 du boîtier 2.

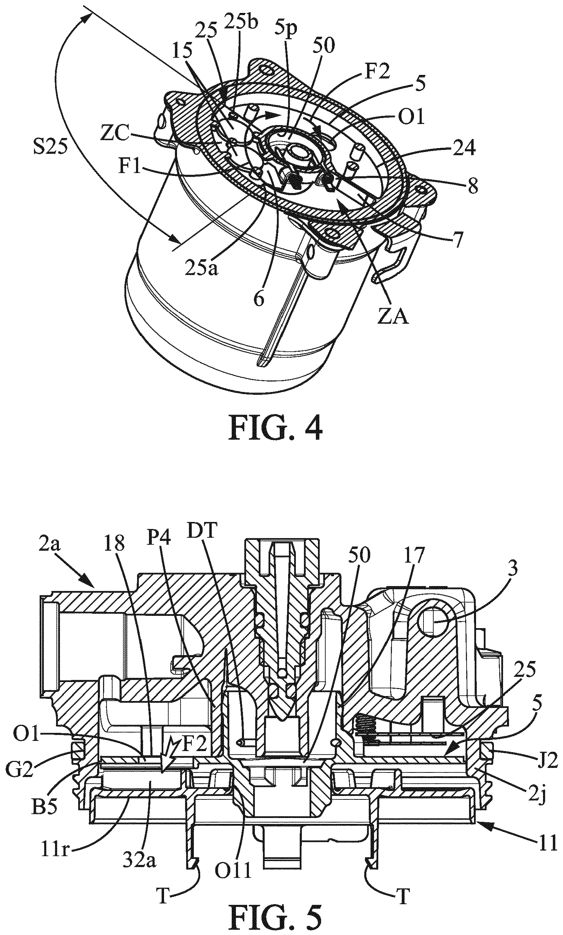

Concernant la réalisation du dispositif de chauffage 25, comme on peut voir sur les figures 3-4 et 8, il est supporté par la plaque 5, sur le dessus, ou il comporte la plaque 5. Dans l'exemple considéré, le dispositif de chauffage 25 est assemblé avec la plaque 5 qui est directement interposée entre la paroi interne supérieure de la partie supérieure (couvercle 2a) du boîtier 2 et le flasque supérieur 11, typiquement rigide, de l'élément filtrant EF. Dans une option, la plaque 5 supporte un ensemble électronique incluant au moins une plaque de circuit imprimé et au moins un ou deux éléments chauffants 15. Cet ensemble électronique présente une faible épaisseur et est disposé au moins en partie autour du passage axial d'évacuation 50. Pour cela, la plaque 5 peut présenter un élément tubulaire 17 pouvant s'emboîter dans un puits central P4 reliée à la sortie 4, en étant à l'aplomb de ce puit central P4 comme bien visible sur les figures 3 et 5. La plaque 5 prend également appui contre la jupe 2j ou paroi interne latérale du couvercle 2a. L'élément tubulaire 17 peut se projeter axialement vers le bas et vers le haut par rapport à la partie de fermeture de la plaque 5 servant à fermer par le bas la première enceinte 24. Une projection annulaire 5p saillante vers le haut peut ainsi constituer une partie de l'élément tubulaire 17. La projection annulaire 5p forme ici un premier organe de positionnement. Une projection annulaire dans l'autre direction, forme un deuxième organe de positionnement 55 prévu pour réaliser un contact étanche annulaire, de préférence radial, contre le flasque 11 autour d'une ouverture O11 de ce flasque 11. L'ouverture O11 et l'élément tubulaire 17 permettent un retour du carburant filtré vers la tête de filtre ou couvercle 2a.

Comme on peut le voir plus en détail sur les figures 3-4, la première enceinte 24 est agencée de façon annulaire autour de l'élément tubulaire 17 et la ou les plaques du dispositif de chauffage 25 (dont au moins une plaque de circuit imprimé 6) s'étendent circonférentiellement entre deux bords d'extrémité 25a, 25b, de sorte que le dispositif de chauffage 25 occupe une zone de chauffage ZC dans la première enceinte 24, en laissant libre un secteur angulaire (sans élément de chauffage) plus grand que le secteur angulaire S25 correspondant à la zone de chauffage ZC. Dans l'exemple illustré, la zone de chauffage ZC où s'étend le dispositif de chauffage 25 est ainsi limitée à un secteur angulaire S25 qui ne dépasse pas 150°.

De plus, la première enceinte 24 présente un élément séparateur constitué ici par un élément de paroi 8 intégralement formé avec le boitier 2, ici en étant rendu solidaire du couvercle 3a comme illustré sur la figure 3. L'élément de paroi 8 peut être complété par un membre saillant du flasque 11 supérieur comme il sera détaillé plus loin. Le carburant brut arrivant par l'entrée 3 et déversé vers la plaque 5 via le puit central P4 peut circuler dans la première enceinte 24 en tournant autour de l'élément tubulaire 17.

Dans la première enceinte 24, on peut distinguer une zone d'antichambre ZA dans laquelle le carburant issu de l'entrée 3 arrive avant d'être chauffé par les éléments chauffants 15 du dispositif de chauffage 25. Dans cet exemple, la zone d'antichambre ZA s'étend radialement entre la projection annulaire 5p et la face interne jupe 2j annulaire, en étant délimité en outre entre l'élément de paroi 8 et un premier bord d'extrémité 25a du dispositif de chauffage 25.

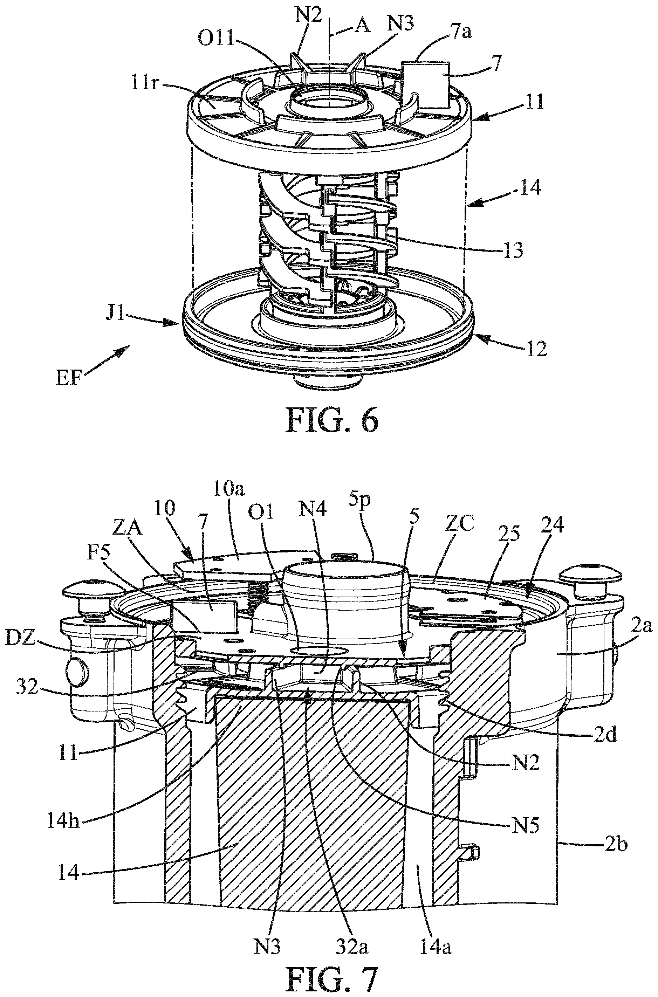

En référence aux figures 4 et 7, la zone d'antichambre ZA peut permettre de loger tout ou partie d'un composant fonctionnel, par exemple un détecteur de température 10. L'entrée 3 peut être adjacente à ce détecteur 10 ou un autre composant fonctionnel. Des terminaisons ou bornes de détection DT de ce détecteur de température 10 sont visibles sur les figures 3 et 5, en permettant de mesurer une température du carburant propre. La mesure est ici réalisée par des bornes de détection DT placées dans le passage axial d'évacuation 50. Grâce à la filtration, on évite un risque que de l'eau ou des impuretés altèrent la mesure. L'élément tubulaire 17 peut par exemple supporter au moins une des extrémités ou bornes de détection DT d'un capteur/détecteur de température.

En raison de la présence dans la première enceinte 24 de l'élément de paroi 8 sur lequel vient s'engager une cloison saillante 7 ou membre saillant similaire du flasque 11 et compte tenu de l'absence (ou quasi absence) de possibilité d'écoulement au travers de la projection annulaire 5p ou au travers d'une paroi du boîtier 2 délimitant extérieurement la première enceinte 24, le carburant brut va essentiellement pouvoir sortir de la zone d'antichambre ZA en circulant vers le dispositif de chauffage 25, suivant la trajectoire illustrée sur la figure 4 et définissant un sens giratoire F1.

Le carburant brut est alors réchauffé dans la zone de chauffage ZC adjacente à la zone d'antichambre ZA, par les éléments chauffants 15, ici sous la forme d'éléments résistifs de type "PTC", c'est à dire à coefficient de température positif. Ensuite, le carburant continue de circuler autour de la projection annulaire 5p ou élément tubulaire similaire de délimitation interne pour rejoindre une ouverture traversante ou autre accès incluant un passage axial 18 pour quitter la première enceinte 24. Ici, la plaque 5 est pourvue d'une ouverture axiale O1 (trou unique traversant) décalée radialement sur un côté par rapport au passage axial d'évacuation 50. Bien entendu, tout passage axial 18 approprié peut être prévu pour permettre la circulation du carburant depuis l'entrée 3 jusqu'à l'élément filtrant EF.

Comme montré sur les figures 1 et 4, l'ouverture axiale O1 peut notamment être disposée de manière à être sensiblement diamétralement opposée à l'un parmi le dispositif de chauffage 25 et un débouché de l'orifice d'entrée 3 en partie supérieure du boîtier 2 de telle sorte que le gazole ou carburant similaire entrant dans la première enceinte 24 parcourt un trajet correspondant à au moins un demi-tour autour de la projection 5p (plus généralement autour du passage 50) pour rester suffisamment en contact avec le premier dispositif de chauffage 25.

Afin de maintenir le dispositif de chauffage 25 solidaire de la partie supérieure du boîtier 2, la plaque 5 peut optionnellement être pourvue d'une pluralité de trous traversant 5d qui viennent s'emboîter, par exemple par clipsage, sur des plots 30 qui s'étendent vers le bas depuis la paroi interne supérieure du couvercle 2a ou autre composant de boiter formant la partie supérieure. On peut également prévoir de fixer des plaques du dispositif de chauffage 25 sur la partie supérieure du boîtier 2, en engageant des trous traversant de ces plaques autour de plots à filetage femelle intégrés dans la partie supérieure du boîtier 2 et en rapportant des vis (non représentées) dans de tels plots.

Afin d'alimenter électriquement le dispositif de chauffage 25, et éventuellement d'autres composant fonctionnels (comme le détecteur de température 10 par exemple), le couvercle 5a ou autre partie supérieure du boîtier 2 peut également comporter un connecteur externe CE, visible notamment sur les figures 1, 2 et 5, comportant des broches B2 qui traversent avec étanchéité la partie supérieure du boîtier 2. Au moins une partie de ces broches s'étendent jusqu'à des extrémités intérieures situées dans la première enceinte 24 et/ou sont en contact avec des ressorts électriquement conducteurs qui sont reliés à des pistes conductrices de la plaque 5. Dans une option, il est prévu des bornes ou éventuellement des broches complémentaires qui coopèrent avec les extrémités intérieures des broches du connecteur externe CE pour raccorder électriquement au moins une plaque imprimée appartenant au dispositif de chauffage 25 avec le connecteur externe CE. On peut également prévoir de souder les broches B2 du connecteur externe CE directement sur une plaque de circuit imprimé.

La plaque 5 et/ou le couvercle 2a peut supporter aussi d'autres composants électriques tels qu'un capteur thermique et/ou un détecteur d'eau destiné à être relié à des électrodes qui s'étendent vers le bas jusqu'à une zone de collecte d'eau d'un compartiment de collecte d'eau CC.

Concernant l'élément filtrant EF et comme visible sur la figure 1 et sur la figure 6, celui-ci comporte un média filtrant 14 qui s'étend de façon annulaire autour d'un axe longitudinal A, entre un flasque 11 supérieur typiquement rigide et un flasque 12 inférieur typiquement rigide. Le média filtrant 14 peut être notamment réalisé en papier plissé. L'axe longitudinal A est un axe de révolution. Le média filtrant 14 est disposé autour d'un tube perforé/ajouré 13 et délimite l'espace intérieur creux 9 par sa face interne 14b. Le flasque inférieur 12 recouvre de façon étanche l'extrémité axiale inférieure du média 14 tandis que le flasque supérieur 11 recouvre de façon étanche l'extrémité axiale supérieure 14h du média 14. Le tube 13 peut être rendu solidaire du flasque 11 en se fixant à une extrémité supérieure 13a de ce tube 13, par exemple par encliquetage. Pour cela, le flasque supérieur 11 peut présenter plusieurs pattes d'encliquetage T saillantes axialement vers le bas et se raccordant (à leur base respective) à la portion radiale 11p du flasque 11.

Une gorge périphérique G1 prévue dans le flasque inférieur 12 permet selon une option de porter un joint J1 participant à l'étanchéité annulaire contre la paroi P3 (ici par un contact radial annulaire), afin de séparer le compartiment de collecte d'eau CC d'une région périphérique de la zone d'amont Z1 où circule du carburant brut. Ainsi, l'eau accumulée dans le compartiment de collecte CC est du côté propre de la filtration, c'est à-dire du côté de la zone d'aval Z2.

Le flasque 11 supérieur comprend une portion radiale 11r de forme annulaire (sensiblement plane) qui recouvre l'extrémité axiale supérieure 14h du média 14. Le flasque 11 supérieur présente également une projection annulaire interne 11p qui fait saillie vers le haut depuis un bord interne ou une zone de marge interne de la portion radiale 11r et qui s'engage de manière étanche dans ou autour de l'élément tubulaire 17 qui communique avec la sortie 4.

Plus généralement, le flasque 11 présente une ouverture O11 pour la circulation de carburant propre depuis l'espace intérieur creux 9, qui communique avec la sortie 4 via un passage axial d'évacuation 50 passant par l'ouverture O11. Comme illustré notamment sur les figures 1, 3 et 5, ce passage axial d'évacuation 50 traverse la première enceinte 24, en étant délimité par l'élément tubulaire 17 qui est typiquement intégralement formé avec la plaque 5. La plaque 5 constitue une plaque de fermeture par le dessous de la première enceinte 24 et permet de délimiter, entre sa face inférieure (deuxième face 5b) et le flasque 11, un compartiment intermédiaire 32. Ce compartiment 32 est disposé axialement entre la première enceinte 24 et la deuxième enceinte 34.

Bien qu'on montre ici un flasque 11 qui intègre ou supporte la cloison saillante 7, on comprend que tout organe saillant approprié pour former une telle cloison 7 peut appartenir à ou être porté par un autre composant de l'élément filtrant EF. Par exemple, le tube 13 peut supporter un ou plusieurs organes qui sont saillants en s'étendant longitudinalement au-delà du flasque 11, en direction de la partie supérieure P1.

À l'état monté de l'élément filtrant EF dans le volume intérieur du boîtier 2, on comprend que la première enceinte 24 se situe dans une zone d'aval Z1 par rapport au média filtrant 14, de sorte que c'est du carburant brut (non filtré) qui circule le long d'éléments chauffants 15 du dispositif de chauffage 25 dans la première enceinte 24 avant de rejoindre le compartiment 32 via une ouverture traversante de la plaque 5.

Bien que la plaque 5 présente ici une unique ouverture axiale O1 pour permettre d'alimenter en carburant brut de la première enceinte 24 le compartiment 32, on comprend que tout passage axial d'alimentation 18, de préférence décalée radialement sur un côté déterminé par rapport passage axial d'évacuation 50, peut convenir pour faire circuler le carburant brut vers le compartiment 32.

Le compartiment 32 peut optionnellement être cloisonné afin que du carburant brut chauffé issu de la première enceinte 24 ne sorte pas dans toutes les directions en se répartissant sur toute la surface du flasque 11. Il est en effet préférable d'éviter, lors d'une situation de démarrage à froid, de mélanger de façon importante ce carburant chauffé avec du carburant froid déjà présent dans le filtre 1.

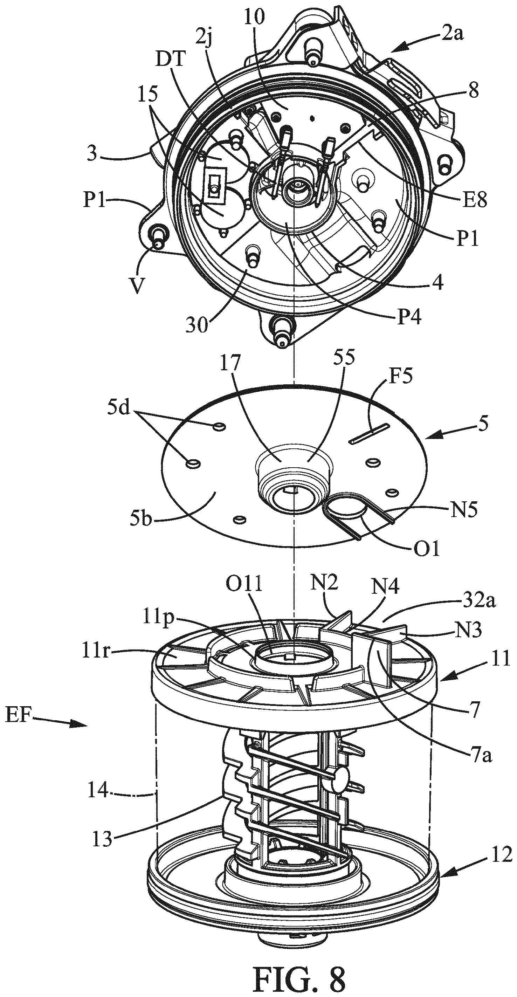

Pour cela, il est prévu un moyen déflecteur dont la section est par exemple sensiblement en forme de « U » dans un plan perpendiculaire à l'axe longitudinal, afin de guider vers l'extérieur du carburant brut chauffé débouchant par l'ouverture axiale O1, suivant un secteur angulaire inférieur à 90° ou 80°, de préférence inférieur ou égal à 40°. Des formes concentriques (nervures, murets) peuvent être formées sur le dessus du flasque supérieur 11 afin de guider le flux en sortie de la première enceinte 24 vers un secteur défini limité et ainsi éviter une dilution trop rapide du carburant chauffé avant d'atteindre la face externe 14a du média 14. En référence à la figure 8, on peut voir qu'au moins une nervure N5 est également formée sur la deuxième face 5b de la plaque 5 de fermeture. La nervure N5 a ici le même profil, vu en coupe transversale/perpendiculaire par rapport à l'axe longitudinal A, que la ou les nervures N2, N3, N4 situées à l'aplomb de la nervure N5 et délimitant une antichambre 32a du compartiment 32. Un profil général en « U », vu dans un plan perpendiculaire à l'axe longitudinal A, peut être utilisé.

Avec cette disposition, le carburant (gazole) est guidé vers une surface restreinte du média filtrant 14 sans se mélanger de façon importante avec le gazole/carburant froid déjà présent dans le filtre 1. Il arrivera ainsi plus chaud sur cette petite surface de média. Le carburant arrivant chaud liquéfiera l'agglomérat potentiel de paraffine présent en surface du média en ce point local, et permettra de limiter de façon plus efficace la montée en pression du filtre 1 lors d'un démarrage à froid, par comparaison avec la situation où le gazole chaud se répand vite de façon homogène dans toute la deuxième enceinte 34 et sur toute la surface de la face externe 14a du média filtrant 14.

On décrit à présent plus en détail le rôle de l'élément filtrant EF dans la circulation du carburant dans la première enceinte 24, en référence aux figures 3 à 8.

L'élément filtrant EF se monte dans la deuxième enceinte 34 formée sous la première enceinte 24 et le flasque supérieur 11 permet à la fois :
- de forcer le carburant à circuler dans le sens giratoire F1 montré sur la figure 4, en forçant le carburant à passer dans le secteur angulaire S25 correspondant à la zone de chauffe.
- d'empêcher que du carburant brut chauffé dans la première enceinte 24 se déverse sur toute la périphérie de l'élément filtrant 11.

Des moyens écarteurs, ici formés intérieurement dans le bol 2b comme des saillies internes ou une projection annulaire, permettent de supporter l'élément filtrant EF à distance de la paroi de fond P2, ce qui laisse un espace sous le média 14 pour définir le compartiment de collecte CC.

Dans la première enceinte 24, il doit être compris que le carburant brut (non filtré) qui entre par le conduit à l'entrée 3 chemine comme suit :
- Entrée dans la première enceinte 24, en tombant sur la plaque 10a visible sur la figure 7, qui est typiquement une plaque de circuit imprimé 10a où est monté un composant fonctionnel, ici de façon à former un détecteur de température 10 ;
- Passage sous la plaque 10a, par une ou plusieurs ouvertures hautes, le carburant tombant sur la plaque 5 dans une zone d'antichambre ZA ;
- Début de circulation dans le sens giratoire pour quitter la zone d'antichambre ZA où se situe ici le détecteur de température 10 et accès à la zone de chauffage ZC pour permettre une augmentation de température du carburant liquide ;
- Accès ensuite, comme illustré par la flèche F2, à l'ouverture axiale de passage O1 ou tout passage axial similaire 18, 18' ou 18" menant à la chambre de filtration (deuxième enceinte 34), en traversant typiquement la plaque 5.

Dans des options, la cloison saillante 7 sépare une zone d'antichambre ZA d'une zone de volume mort DZ ou peut s'accumuler du carburant brut. Sur la figure 7, on peut voir que cette zone de volume mort DZ s'étend entre la cloison 7 et le passage axial constitué par l'ouverture O1, en aval de l'ouverture O1 suivant le sens giratoire F1.

En référence à la figure 4, le flasque 11 pourvu de la cloison saillante 7, ici sous la forme d'une patte axiale, permet de guider le carburant tombant sur la plaque 5 car celui-ci ne peut pas s'évacuer dans le sens antihoraire.

La coopération de la patte axiale avec une fente F5 d'insertion dans la plaque 5 de fermeture et éventuellement dans le boîtier ou composant coiffant le volume interne de la première enceinte 24 impose au flux une circulation dans la zone ZC pourvue des éléments de chauffants 15 avant de sortir plus loin par l'ouverture O1. Sur la figure 8, on peut voir qu'un élément de paroi 8 ou élément séparateur similaire, ici en formant une cloison d'extension radiale à l'exception d'un évidement E8 (cloison ajourée), peut être intégré au ou prévu solidaire du couvercle 3a. La cloison saillante 7 prévue dans l'élément filtrant EF peut combler cet évidement E8, par complémentarité de forme, ce qui permet de constituer un muret non ajouré. Ici, un bord libre supérieur 7a de la cloison saillante 7 peut venir axialement en contact contre l'élément de paroi 8 solidaire du boîtier 2.

En l'absence de l'élément filtrant EF, le muret de compartimentation dont fait partie la cloison saillante 7 présente un passage de grande section dans la première enceinte 24 menant directement à l'ouverture O1 vers la deuxième enceinte 34 (sans passer par la zone de chauffage ZC). Par conséquent, une majorité du flux passerait par l'ouverture O1 vers la deuxième enceinte 34 sans être réchauffé. Ceci permet ainsi de dissuader d'utiliser un élément filtrant inadéquat / non préconisé par le constructeur automobile.

Comme visible sur la figure 7, le flasque 11 permet, dans sa position de montage (ici indexée en rotation par l'insertion dans une fente F5), de former l'antichambre 32a du compartiment 32 à l'aplomb de l'ouverture axiale O1 et peut éviter un écoulement anarchique du carburant circulant descendant par l'ouverture axiale O1. Dans ce niveau correspondant au compartiment 32, le carburant liquide chauffé peut être guidé rapidement vers un secteur angulaire réduit, par exemple réduit à 40° ou moins. Ceci peut améliorer significativement le démarrage à froid.

L'élément filtrant EF dispose d'ouvertures O2 dans le flasque inférieur 12, afin de permettre à des gouttelettes d'eau séparées dans l'espace intérieur creux 9 de rejoindre l'espace de collecte CC. En référence à la figure 1, un tel compartiment de collecte est typiquement prévu, le long d'une portion de fond P2 du boîtier 2, ici au fond du bol 2b. Ce compartiment inférieur permet de collecter de l'eau séparée par l'élément filtrant EF. La séparation d'eau peut être d'un genre connu en soi, la séparation de gouttelettes d'eau présentes dans le carburant (gazole ici) étant par exemple réalisée dans l'espace intérieur creux 9 délimité par la face interne 14b du média filtrant 14.

L'ensemble du flasque supérieur 11 et de la cloison saillante 7 ainsi que les éventuelles nervures N2, N3, N4 sont de préférence réalisés d'une seule pièce, par exemple par moulage de matière plastique.

Par ailleurs, comme on peut le voir sur les figures 1, 3 et 5, la face inférieure du flasque supérieur 11 destinée à être au contact du média filtrant 14 comprend un rebord externe saillant et un rebord interne saillant (chacun saillant vers le bas) qui sont destinés à entourer de manière étanche l'extrémité axiale supérieure 14h. La même structure peut être utilisée pour le flasque inférieur 11. Optionnellement, on peut supprimer le rebord interne et/ou chacun de ces rebords.

Par ailleurs, la plaque 5 peut être moulée en plastique et inclure des contacts conducteurs pour l'alimentation électrique du dispositif de chauffage 25. Alternativement, la plaque 5 peut être un élément constitutif du dispositif de chauffage 25, par exemple en étant au moins en partie formé par une plaque métallique sur laquelle sont rapportés le ou les éléments résistifs (résistances chauffantes de type PTC) du dispositif de chauffage de carburant, la plaque métallique diffusant alors la chaleur au carburant brut.

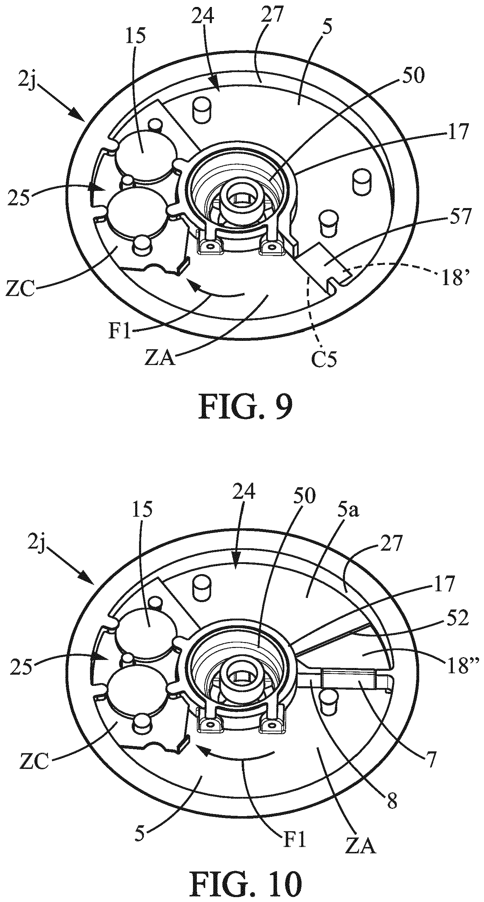

En référence à la figure 9, il est montré une variante de réalisation pour guider la circulation du carburant brut dans la première enceinte 24. Ici, un rabat 57 est prévu actionnable par le dessous par la patte axiale du flasque 11, cette patte étant par exemple du genre illustré sur les figures 6 et 8, éventuellement en étant plus courte tout en traversant le compartiment 32. Pour l'état monté de l'élément filtrant EF, le rabat 57 est poussé vers le haut par la patte axiale du flasque 11 et un passage axial 18' est alors libéré. On peut éventuellement former une cloison saillante à deux couches 57, 7 ou simplement bénéficier d'un effet de rappel élastique du rabat 57 s'il commence à être poussé par le flasque 11. L'effet de rappel élastique peut être par exemple obtenu via sa charnière C5. Ici, on prévoit un rabat 57 intégralement formé avec / venu de matière avec la plaque 5. Comme vu précédemment, on forme le même type de muret, et le carburant est forcé à circuler dans la première enceinte 24 selon le sens giratoire F1.

Dans la forme de réalisation de la figure 10, il est illustré une autre variante dans laquelle la plaque 5 s'étend entre deux bords d'extrémité en laissant libre un passage axial 18". L'un des deux bords d'extrémité est engagé par la cloison saillante 7 formée dans le flasque supérieur 11 de l'élément filtrant EF. Le passage 18" sépare ici les deux bords d'extrémité de la plaque 5 et n'est pas accessible du côté du bord sur lequel s'appuie la cloison saillante 7. Ici également, la cloison saillante 7 forme alors partie d'un ensemble de cloisonnement reliant radialement l'élément tubulaire 17 à la paroi interne 27 du couvercle 2a ou d'un autre composant adjacent à/formant la partie supérieure P1 du boîtier 2.

Typiquement et comme dans les modes de réalisation qui précèdent, la plaque 5 s'étend transversalement sous la jupe 2j du couvercle 2a et vient s'appuyer radialement (de façon annulaire, par au moins un bourrelet annulaire B5 tel que montré sur la figure 5) contre la paroi interne 27 formée ici au niveau de la jupe 2j. Pour obtenir un effet de guidage suivant la trajectoire ou sens giratoire F1, de façon similaire aux autres options déjà décrites, la cloison saillante 7 borde le passage 18" sans laisser de fente de passage. Le flasque 11 peut en outre posséder un organe de positionnement formé comme une saillie additionnelle (non représentée) venant en appui contre l'autre bord d'extrémité de la plaque 5 sans pour autant cloisonner la première enceinte 24. Ainsi, on s'assure que la cloison saillante 7 sera bien positionnée de façon à border le passage 18" avec un appui sur le bord opposé, et s'opposer à ce que du carburant brut circule suivant un sens de circulation opposé au sens giratoire F1.

Ici également, la zone d'antichambre ZA peut être plus proche du passage axial d'alimentation 18" en suivant le sens opposé au sens giratoire F1, de sorte que le carburant brut ne serait pas chauffée en l'absence de la cloison saillante 7 lorsque les éléments chauffants 15 sont placés sélectivement sur la trajectoire du sens giratoire F1, comme bien visible sur la figure 10. L'élément tubulaire 17 de délimitation du passage axial d'évacuation 50 peut être identique ou très similaire à celui des formes de réalisation précédemment décrites. Le carburant brut circule autour de l'élément tubulaire le long de la face 5a jusqu'à atteindre le bord d'extrémité 52 distal (ici radial) ou bord similaire délimitant le passage 18". Ensuite, le carburant brut rejoint le compartiment 32, typiquement via l'antichambre 32a, et peut être filtré dans la deuxième enceinte 34, en circulant comme illustré par les flèches sur la figure 1.

Un des avantages de l'invention est de permettre, notamment par une partie saillante d'un flasque 11 de l'élément filtrant EF et un élément tubulaire (17) de la plaque 5, de cloisonner la première enceinte 24 pour imposer un sens giratoire d'écoulement de carburant passant par le dispositif chauffant 25. Sans l'action de la partie saillante (typiquement la cloison saillante 7 dans l'enceinte 14) requise pour réaliser ce cloisonnement, le réchauffage de carburant n'est aussi efficace.

L'élément filtrant EF peut éventuellement être dépourvu de flasque inférieur selon certaines options. Bien que le flasque supérieur 11 est décrit comme formé d'une seule pièce et globalement rigide, on comprend qu'il peut présenter des parties rapportés et/ou des portions élastiquement déformables. Il peut donc aussi être conçu comme un ensemble multicouche ou un assemblage de plusieurs pièces, pour ne citer que quelques variantes de réalisation.

## Revendications

1. Filtre à carburant (1) comprenant un boitier (2) qui délimite un volume intérieur dans lequel est disposé de façon amovible un élément filtrant (EF) qui sépare le volume intérieur en une zone d'amont (Z1) communiquant avec une entrée (3) de carburant brut et en une zone d'aval (Z2) communiquant avec une sortie (4) de carburant filtré, ledit élément filtrant (EF) comprenant un média filtrant (14) qui s'étend de façon annulaire autour d'un axe longitudinal (A), entre deux extrémités axiales dont l'une est constituée par un flasque (11) de recouvrement d'une face axiale (14h) du média filtrant (14), le filtre (1) comprenant en outre :
- un espace intérieur creux (9) délimité intérieurement par le média filtrant (14) ;
- une plaque (5) interposée entre l'entrée (3) et ledit flasque (11) de l'élément filtrant (EF), ladite plaque (5) comprenant une première face (5a) délimitant avec le boîtier (2) une première enceinte (24) en communication avec l'entrée (3) ;
- un dispositif de chauffage (25) qui s'étend dans la première enceinte (24) ;
- un passage axial d'évacuation (50) passant ou débouchant par une ouverture (O11) du flasque (11) pour faire communiquer l'espace intérieur creux (9) avec la sortie (4), le passage axial d'évacuation (50) traversant la première enceinte (24) ;
dans lequel le média filtrant (14) s'étend dans une deuxième enceinte (34) où s'effectue une filtration centripète de carburant, depuis une région annulaire périphérique dans la zone d'amont (Z1) vers l'espace intérieur creux (9) ;
**caractérisé en ce que** le flasque (11), qui appartient à l'élément filtrant (EF) en étant logé dans le volume intérieur du boîtier (2), et la plaque (5) délimitent axialement entre eux un compartiment (32), qui est intermédiaire entre la première enceinte (24) et la deuxième enceinte (34) et qui est alimenté en carburant brut de la première enceinte (24) par un passage axial d'alimentation (18) décalé radialement sur un côté déterminé par rapport au passage axial d'évacuation (50) ;
**et en ce qu'**il est prévu au moins une cloison saillante (7 ; 57) qui fait saillie axialement par rapport à la plaque (5) dans la première enceinte (24) en permettant de cloisonner la première enceinte (24) et guider et/ou forcer un écoulement de carburant brut vers un ou plusieurs éléments chauffants (15) du dispositif de chauffage (25), ladite au moins une cloison saillante (7 ; 57) étant formée par et/ou placée dans une position active de cloisonnement depuis une position de non cloisonnement par un ou des organes saillants appartenant à l'élément filtrant, le ou les organes saillants constituant de préférence l'au moins une cloison (7) en traversant axialement la plaque (5).

2. Filtre selon la revendication 1, dans lequel le ou les organes saillants appartiennent au flasque (11).

3. Filtre selon la revendication 1 ou 2, dans lequel l'au moins une cloison saillante (7 ; 57) est conçue et agencée pour :
- guider et/ou forcer une circulation du carburant brut dans la première enceinte (24) suivant un sens giratoire autour d'un élément tubulaire (17) de délimitation du passage axial d'évacuation (50) et suivant une trajectoire (F1) passant par un ou plusieurs éléments chauffants (15) du dispositif de chauffage (25), et
- s'opposer à ce que du carburant brut circule suivant un sens de circulation opposé au sens giratoire en passant par une zone de la première enceinte (24) dépourvue d'élément chauffant (15) et menant au passage axial d'alimentation.

4. Filtre selon la revendication 1 ou 2, dans lequel la plaque (5) présente un élément tubulaire (17) de délimitation du passage axial d'évacuation (50) qui inclut ou est entouré par :
- un premier organe de positionnement (5p) prévu pour coopérer par emboîtement axial dans un puits central d'une tête de filtre ou couvercle (2) formant une partie supérieure (P1) du boîtier intégrant l'entrée (3) et la sortie (4) ; et
- un deuxième organe de positionnement (55) prévu pour réaliser un contact étanche annulaire, de préférence radial, contre le flasque (11) autour de ladite ouverture (O11) du flasque (11).

5. Filtre selon la revendication 3 ou 4, dans lequel ledit élément tubulaire (17) supporte au moins une extrémité ou borne de détection (DT) d'un détecteur de température.

6. Filtre selon l'une quelconque des revendications précédentes, dans lequel l'au moins une cloison saillante (7 ; 57) comporte une patte axiale saillante appartenant au flasque (11) et en contact étanche contre un élément de paroi (8) solidaire du boîtier (2) qui s'étend dans un plan parallèle à l'axe longitudinal (A).

7. Filtre selon l'une quelconque des revendications précédentes, dans lequel l'au moins une cloison saillante (7) comporte une patte axiale saillante appartenant au flasque (11) et insérée dans une fente (F5) de la plaque (5).

8. Filtre selon l'une quelconque des revendications précédentes, dans lequel le passage axial d'alimentation (18 ; 18' ; 18") est réalisé par une ouverture axiale de passage (O1), formée dans la plaque (5).

9. Filtre selon la revendication 8, dans lequel la plaque (5) présente, sur une deuxième face (5b) opposée à la première face (5a), une nervure (N5) adjacente à l'ouverture axiale de passage (O1) pour dévier radialement vers l'extérieur le carburant brut, sélectivement dans un secteur angulaire ne dépassant pas 120°.

10. Filtre selon la revendication 8 ou 9, dans lequel il est prévu, à l'aplomb de l'ouverture axiale de passage (O1), une antichambre (32a) du compartiment (32) qui présente une hauteur plus faible qu'une hauteur minimale de la première enceinte (24) mesurée à l'aplomb de l'ouverture axiale de passage (O1).

11. Filtre selon l'une quelconque des revendications 8 à 10, dans lequel le flasque (11) présente un moyen déflecteur, dont la section est sensiblement en forme de « U » dans un plan perpendiculaire à l'axe longitudinal (A), afin de guider radialement vers l'extérieur du carburant brut sortant de l'ouverture axiale de passage (O1) suivant un secteur angulaire inférieur ou égal à 90°, de préférence inférieur à 80°.

12. Filtre selon l'une quelconque des revendications précédentes, dans lequel il est prévu dans la première enceinte (24) une zone d'antichambre (ZA) dans laquelle le carburant issu de l'entrée (3) arrive avant d'être chauffé par le ou les éléments chauffants (15) du dispositif de chauffage (25), le flasque (11) incluant la cloison saillante (7) pour délimiter tout ou partie d'un bord arrière de la zone d'antichambre (ZA).

13. Filtre selon l'une quelconque des revendications précédentes, dans lequel la plaque (5) présente un bourrelet annulaire (B5) qui fait saillie sur une face périphérique extérieure annulaire de la plaque (5), et permettant de réaliser un contact annulaire continu contre le boîtier (2), qui est de préférence un contact étanche.

## Patentansprüche

1. Kraftstofffilter (1) aufweisend ein Gehäuse (2), das ein Innenvolumen begrenzt, in welchem auf herausnehmbare Weise ein Filtrierelement (EF) angeordnet ist, das das Innenvolumen in eine stromaufwärtsseitige Zone (Z1), die mit einem Einlass (3) für Rohkraftstoff kommuniziert, und in eine stromabwärtsseitige Zone (Z2), die mit einem Auslass (4) für gefilterten Kraftstoff kommuniziert, separiert, wobei das Filtrierelement (EF) ein Filtriermedium (14) aufweist, das sich auf ringförmige Weise um eine Längsachse (A) zwischen zwei axialen Enden erstreckt, von denen eines aus einem eine axiale Fläche (14h) des Filtriermediums (14) bedeckenden Flansch (11) besteht, wobei der Filter (1) ferner aufweist:
- einen inneren Hohlraum (9), der innen von dem Filtriermedium (14) begrenzt wird;
- eine Platte (5), die zwischen dem Einlass (3) und dem Flansch (11) des Filtrierelements (EF) angeordnet ist, wobei die Platte (5) eine erste Fläche (5a) aufweist, die gemeinsam mit dem Gehäuse (2) eine mit dem Einlass (3) in Kommunikation stehende erste Kammer (24) begrenzt;
- eine Heizvorrichtung (25), die sich in der ersten Kammer (24) erstreckt;
- einen axialen Ausspeisungsdurchlass (50), der durch eine Öffnung (O11) des Flansches (11) hindurchgeht oder ausmündet, um den inneren Hohlraum (9) mit dem Auslass (4) kommunizieren zu lassen, wobei der axiale Ausspeisungsdurchlass (50) die erste Kammer (24) durchquert;
wobei sich das Filtriermedium (14) in einer zweiten Kammer (34) erstreckt, wo eine zentripetale Kraftstofffilterung von einem ringförmigen Randbereich in der stromaufwärtsseitigen Zone (Z1) zu dem inneren Hohlraum (9) erfolgt;
**dadurch gekennzeichnet, dass** der Flansch (11), der zu dem Filtrierelement (EF) gehört, wenn in das Innenvolumen des Gehäuses (2) eingesetzt, und die Platte (5) axial zwischen sich ein Fach (32) begrenzen, das sich zwischen der ersten Kammer (24) und der zweiten Kammer (34) befindet und das über einen axialen Einspeisungsdurchlass (18), der bezüglich des axialen Ausspeisungsdurchlasses (50) radial auf eine vorgegebene Seite versetzt ist, mit Rohkraftstoff der ersten Kammer (24) gespeist wird;
und dadurch, dass mindestens eine vorspringende Scheidewand (7; 57) vorgesehen ist, die in der ersten Kammer (24) axial bezüglich der Platte (5) vorspringt, dabei erlaubt, die erste Kammer (24) zu unterteilen und einen Fluss Rohkraftstoffs hin zu einem oder mehreren Heizelementen (15) der Heizvorrichtung (25) zu führen und/oder zu zwingen, wobei die mindestens eine vorspringende Scheidewand (7; 57) von einem oder mehreren dem Filtrierelement zugehörigen vorspringenden Teilen gebildet wird und/oder von einem oder mehreren dem Filtrierelement zugehörigen vorspringenden Teilen aus einer nichtunterteilenden Position in eine aktive Unterteilungsposition positioniert wird, wobei das oder die vorspringenden Teile vorzugsweise die mindestens eine Scheidewand (7) bilden, indem sie die Platte (5) axial durchqueren.

2. Filter nach Anspruch 1, in welchem das oder die vorspringenden Teile zu dem Flansch (11) gehören.

3. Filter nach Anspruch 1 oder 2, in welchem die mindestens eine vorspringende Scheidewand (7; 57) konzipiert und eingerichtet ist, um:
- eine Zirkulation Rohkraftstoffs in der ersten Kammer (24) in Kreisrichtung um ein röhrenförmiges Begrenzungselement (17) des axialen Ausspeisungsdurchlasses (50) herum und einem Pfad (F1) folgend zu lenken und/oder zu zwingen, der ein oder mehrere Heizelemente (15) der Heizvorrichtung (25) überquert, und
- zu verhindern, dass Rohkraftstoff in eine der Kreisrichtung entgegengesetzte Zirkulationsrichtung zirkuliert, dabei eine Zone der ersten Kammer (24) durchquert, die ohne Heizelement (15) ist und zu dem axialen Einspeisungsdurchlass führt.

4. Filter nach Anspruch 1 oder 2, in welchem die Platte (5) ein röhrenförmiges Begrenzungselement (17) des axialen Ausspeisungsdurchlasses (50) aufweist, das aufweist oder umgeben ist von:
- einem ersten Positionierungsglied (5p), das vorgesehen ist, um durch axialen Eingriff in einen zentralen Schacht eines Filterkopfs oder Deckels (2) mitzuwirken, der einen oberen Teil (P1) des Gehäuses (3) mit dem darin integrierten Einlass (3) und Auslass (4) bildet; und
- einem zweiten Positionierungsglied (55), das vorgesehen ist, um einen dichten ringförmigen, vorzugsweise radialen, Kontakt gegen den Flansch (11) um die Öffnung (O11) des Flansches (11) herum zu realisieren.

5. Filter nach Anspruch 3 oder 4, in welchem das röhrenförmige Element (17) mindestens ein Detektionsende oder eine -klemme (DT) eines Temperaturdetektors trägt.

6. Filter nach einem der vorstehenden Ansprüche, in welchem die mindestens eine vorspringende Scheidewand (7; 57) eine dem Flansch (11) zugehörige vorspringende axiale Lasche aufweist, die in dichtem Kontakt gegen ein mit dem Gehäuse (2) integrales Wandelement (8) ist und sich in einer zur Längsachse (A) parallelen Ebene erstreckt.

7. Filter nach einem der vorstehenden Ansprüche, in welchem die mindestens eine vorspringende Scheidewand (7) eine dem Flansch (11) zugehörige vorspringende axiale Lasche aufweist, die in einen Schlitz (F5) der Platte (5) eingesetzt ist.

8. Filter nach einem der vorstehenden Ansprüche, in welchem der axiale Einspeisungsdurchlass (18; 18'; 18") aus einer in der Platte (5) gebildeten axialen Durchlassöffnung (O1) gebildet ist.

9. Filter nach Anspruch 8, in welchem die Platte (5) an einer der ersten Fläche (5a) gegenüberliegenden zweiten Fläche (5b) eine an die axiale Durchlassöffnung (O1) angrenzende Rippe (N5) aufweist, um den Rohkraftstoff selektiv in einem Winkelsektor, der 120° nicht überschreitet, radial nach außen zu lenken.

10. Filter nach Anspruch 8 oder 9, in welchem in der Senkrechten der axialen Durchlassöffnung (O1) eine Vorkammer (32a) des Fachs (32) vorgesehen ist, die ein Höhe hat, die geringer als eine minimale Höhe der ersten Kammer (24) ist, gemessen in der Senkrechten der axialen Durchlassöffnung (O1).

11. Filter nach einem der Ansprüche 8 bis 10, in welchem der Flansch (11) eine Ablenkungseinrichtung, deren Querschnitt in einer zur Längsachse (A) senkrechten Ebene im Wesentlichen eine "U"-Form hat, aufweist, um aus der axialen Durchlassöffnung (O1) austretenden Rohkraftstoff in einem Winkelsektor, der kleiner oder gleich 90°, bevorzugt kleiner 80° ist, radial nach außen zu lenken.

12. Filter nach einem der vorstehenden Ansprüche, in welchem in der ersten Kammer (24) eine Vorkammerzone (ZA) vorgesehen ist, in welche der von dem Einlass (3) herkommende Kraftstoff gelangt, bevor er von dem oder den Heizelementen (15) der Heizvorrichtung (25) erhitzt wird, wobei der Flansch (11) die vorspringende Scheidewand (7) aufweist, um einen hinteren Rand der Vorkammerzone (ZA) ganz oder teilweise zu begrenzen.

13. Filter nach einem der vorstehenden Ansprüche, in welchem die Platte (5) eine ringförmige Wulst (B5) aufweist, die an einer ringförmigen Außenumfangsfläche der Platte (5) vorspringt und erlaubt, einen kontinuierlichen ringförmigen Kontakt gegen das Gehäuse (2) zu realisieren, der vorzugsweise ein dichter Kontakt ist.

## Claims

1. A fuel filter (1) comprising a housing (2) that delimits an internal volume in which a filtering element (EF) is removably disposed which separates the internal volume into an upstream zone (Z1) communicating with an inlet (3) of raw fuel and into a downstream zone (Z2) communicating with an outlet (4) of filtered fuel, said filtering element (EF) comprising a filtering medium (14) which annularly extends about a longitudinal axis (A), between two axial ends, one of which consists of a flange (11) for covering an axial face (14h) of the filtering medium (14), the filter (1) further comprising:
- a hollow internal space (9) internally delimited by the filtering medium (14);
- a plate (5) interposed between the inlet (3) and said flange (11) of the filtering element (EF), said plate (5) comprising a first face (5a) delimiting together with the housing (2) a first enclosure (24) in communication with the inlet (3);
- a heating device (25) that extends into the first enclosure (24);
- an axial discharge passageway (50) passing through or opening through an opening (011) of the flange (11) to make the hollow internal space (9) communicate with the outlet (4), the axial discharge passageway (50) passing through the first enclosure (24); wherein the filtering medium (14) extends into a second enclosure (34) where fuel centrifugal filtration takes place, from a peripheral annular region in the upstream zone (Z1) to the hollow internal space (9);
**characterised in that** the flange (11), which belongs to the filtering element (EF) by being housed in the internal volume of the housing (2), and the plate (5) axially delimit a compartment (32) therebetween, which is intermediate between the first enclosure (24) and the second enclosure (34) and which is supplied with raw fuel from the first enclosure (24) by an axial supply passageway (18) radially offset on a determined side with respect to the axial discharge passageway (50);
**and in that** there is provided at least one projecting partition wall (7; 57) that axially projects with respect to the plate (5) in the first enclosure (24) by allowing partitioning the first enclosure (24) and guiding and/or forcing a flow of raw fuel to one or more heating elements (15) of the heating device (25), said at least one projecting partition wall (7; 57) being formed by and/or placed in an active partitioning position from a non-partitioning position by one or more projecting members belonging to the filtering element, the projecting member(s) preferably making up the at least one partition wall (7) by axially passing through the plate (5).

2. The filter according to claim 1, wherein the projecting member(s) belong to the flange (11).

3. The filter according to claim 1 or 2, wherein the at least one projecting partition wall (7; 57) is designed and arranged to:
- guide and/or force a circulation of the raw fuel into the first enclosure (24) along a rotary direction about a tubular element (17) for delimiting the axial discharge passageway (50) and along a trajectory (F1) passing through one or more heating elements (15) of the heating device (25), and
- prevent raw fuel from circulating along a direction of circulation opposite to the rotary direction, passing through a zone of the first enclosure (24) devoid of a heating element (15) and leading to the axial supply passageway.

4. The filter according to claim 1 or 2, wherein the plate (5) has a tubular element (17) for delimiting the axial discharge passageway (50) which includes or is surrounded by:
- a first positioning member (5p) provided to cooperate by axial interlocking in a central well of a filter head or cover (2) forming an upper part (P1) of the housing integrating the inlet (3) and the outlet (4); and
- a second positioning member (55) provided to achieve annular, preferably radial, sealing contact against the flange (11) around said opening (011) of the flange (11).

5. The filter according to claim 3 or 4, wherein said tubular element (17) supports at least one end or detection terminal (DT) of a temperature detector.

6. The filter according to any of the preceding claims, wherein the at least one projecting partition wall (7; 57) includes a projecting axial tab belonging to the flange (11) and in sealing contact against a wall element (8) integral with the housing (2) which extends in a plane parallel to the longitudinal axis (A).

7. The filter according to any of the preceding claims, wherein the at least one projecting partition wall (7) includes a projecting axial tab belonging to the flange (11) and inserted into a slot (F5) of the plate (5).

8. The filter according to any of the preceding claims, wherein the axial supply passageway (18; 18'; 18") is made by an axial passageway opening (O1), formed in the plate (5).

9. The filter according to claim 8, wherein the plate (5) has, on a second face (5b) opposite to the first face (5a), a rib (N5) adjacent to the axial passageway opening (O1) to radially outwardly deflect the raw fuel, selectively in an angular sector not exceeding 120°.

10. The filter according to claim 8 or 9, wherein there is provided, in vertical alignment with the axial passageway opening (O1), a pre-chamber (32a) of the compartment (32) which has a smaller height than a minimum height of the first enclosure (24) measured in vertical alignment with the axial passageway opening (O1).

11. The filter according to any of claims 8 to 10, wherein the flange (11) has a deflector means, the cross-section of which is substantially "U"-shaped in a plane perpendicular to the longitudinal axis (A), in order to radially outwardly guide the raw fuel leaving the axial passageway opening (O1) along an angular sector less than or equal to 90°, preferably less than 80°.

12. The filter according to any of the preceding claims, wherein there is provided in the first enclosure (24), a pre-chamber zone (ZA) into which the fuel from the inlet (3) arrives before being heated by the heating element(s) (15) of the heating device (25), the flange (11) including the projecting partition wall (7) to delimit all or part of a rear edge of the pre-chamber zone (ZA).

13. The filter according to any of the preceding claims, wherein the plate (5) has an annular bead (B5) that projects onto an annular external peripheral face of the plate (5), and allowing continuous annular contact to be made against the housing (2), which is preferably a sealing contact.
